# DEMANDE DE BREVET EUROPEEN

(11) **EP 4 686 672 A1**
(43) Date de publication de la demande: **04.02.2026**
(21) Numéro de dépôt: 25185243.0
(22) Date de dépôt: 25.06.2025
(51) Int. Cl.: B65D 77/04, B65D 81/20, A23B 2/708, A23B 2/721, A23B 4/16, A23B 11/65, A21D 13/32, A21D 13/38, B65D 5/60

(54) **PROCÉDÉ DE PRÉPARATION DE SANDWICHS ET CONDITIONNEMENT GARNI POUR LA MISE EN OEUVRE DE CE PROCÉDÉ**

(30) Priorité: 01.08.2024 FR 2408523
(71) Demandeur: Barde, Jacques, 33119 Cenon (FR)
(72) Inventeur: Barde, Jacques, 33119 Cenon (FR)
(74) Mandataire: IP Trust

(57) **Abrégé**

La présente invention concerne un procédé de préparation de sandwichs caractérisé en ce qu'il comporte une séquence de préparation d'une garniture et une séquence de fourrage d'une baguette caractérisé en ce que :
a) la séquence de préparation d'une garniture consiste
a. à déposer dans un conditionnement (1) avec une face supérieure ouverte, les ingrédients alimentaires de la garniture
b. à introduire le conditionnement (1) ainsi garni dans un sachet étanche et de procéder à une mise sous vide alimentaire ou sous gaz inerte

b) la séquence de fourrage consiste à
a. ouvrir en deux une baguette
b. retirer dans une des moitiés une partie de la mie pour former une cavité (5)
c. déverser dans la cavité (5) ainsi formée le contenu du conditionnement (1) garni après retrait du sachet
d. rabattre la seconde moitié de la baguette sur la cavité (5) fourrée avec la garniture.

L'invention concerne aussi un conditionnement (1) garni pour la mise en œuvre de ce procédé

## Description

### DOMAINE DE L'INVENTION

La présente invention concerne un procédé et un dispositif pour la préparation de sandwichs avec des compositions alimentaires variées. La préparation de sandwichs est généralement effectuée manuellement en fendant du pain (du type baguette ou autre) et en y plaçant des ingrédients, par exemple du jambon, de fromage, de la salade, etc. Cette façon habituelle de procéder présente les deux inconvénients liés :
- aux limitations quant aux types de garnitures possibles, en particulier concernant les préparations alimentaires ou un plats cuisinés à base de morceaux de viande, de volaille, de poisson, de légumes et/ou de sauces. -
- aux difficultés de mise en œuvre et aux désagréments engendrés lors de leur consommation, dus au fait que la garniture a tendance à s'échapper par l'ouverture ;

Certaines techniques connues consistent à enfermer la garniture à l'intérieur de la pâte à pain avant de cuire l'ensemble ou à introduire, au moyen d'une seringue, une garniture sous forme de pâte à l'intérieur d'une cavité pratiquée préalablement dans le pain.

### ARRIERE PLAN TECHNOLOGIQUE

D'autres techniques, comme celles enseignées dans les documents FR 2741782 et FR 2814646, du même déposant, utilisent un tube pourvu d'une ouverture axiale distale destinée à garnir le pain, d'une ouverture latérale proximale destinée à alimenter le tube en garniture et d'un corps apte à recevoir un moyen, du type vis sans fin entraînée en rotation par un mécanisme approprié, destiné à déplacer la garniture de l'ouverture latérale proximale à l'ouverture axiale distale. La vis sans fin utilisée comporte un axe central réduisant le volume disponible à l'intérieur du tube et partageant en deux le volume restant de telle sorte qu'on est limité à l'utilisation de garnitures granuleuses. On est donc confronté aux paramètres antagonistes liés, d'une part, au diamètre réduit de certains pains (comme la baguette) et, d'autre part, au diamètre du tube d'alimentation (et au volume disponible) qui doit être le plus grand possible pour véhiculer des morceaux de viande ou de légumes plus consistants qui sont plus appréciés par le consommateur. En outre, pour obtenir un bon fonctionnement du remplissage du pain et un garnissage uniforme, celui-ci doit être déplacé au fur et à mesure de sa préparation et ce proportionnellement au volume de la garniture transférée.

Enfin, dans le cadre de l'amélioration des techniques ci-avant exposées, le déposant a poursuivi ses recherches et déposé le document FR 2858200 qui enseigne un dispositif constitué d'un tube apte à recevoir une vis sans fin constituée d'une paroi continue hélicoïdale, sans moyeu, et d'un moyen apte à déplacer axialement le pain au fur et à mesure de son garnissage.

On connaît aussi le brevet FR307089381 qui concerne un dispositif pour préparer un sandwich, comportant ;
a) un élément mobile comprenant un support constitué de deux parties symétriques incurvées au niveau de la partie distale et positionné sur une planchette un moyen adapté pour permettre aux deux parties symétriques d'être fixées sur la planchette et de s'écarter de 90 degrés chacune pour maintenir le pain ; un moyen adapté pour saisir la planchette à ses deux extrémités ;
b) un rail pour permettre une translation axiale de la planchette et du support
c) un élément fixe comprenant deux ailettes en forme de tube se rejoignant pour le maintien d'un moyen pour couper le pain ; deux planches parallèles à la planchette comprenant un moyen pour la fixation des deux ailettes sur les deux planches
d) une grande planche comprenant un moyen pour sa fixation sur les deux planches. Le brevet FR2891721B1 décrit un dispositif pour une préparation instantanée de sandwichs chauds ou froids après une gestion séparée de la garniture et du produit panifié composé de deux éléments équipés de systèmes d'ancrages compatibles pour être associés entre eux, soit un outil ou « tracteur » destiné à tracter l'emballage contenant les ingrédients à l'intérieur du pain pré-alvéolé ou non. Lors du mouvement inverse, l'outil ouvre progressivement l'emballage à l'intérieur du pain, pour permettre ensuite la dépose des ingrédients.

On connaît aussi le brevet FR2955016A1 qui décrit un procédé destiné à préparer des sandwichs caractérisé en ce qu'il consiste :
a) à utiliser un tube préalablement rempli d'une composition alimentaire choisie parmi différents types de préparations possibles ;
b) à insérer le tube contenant la composition alimentaire choisie, dans une cavité axiale préalablement aménagée dans le pain constitutif du sandwich ;
c) à retirer ledit tube de ladite cavité et à transférer, dans celle-ci, par l'extrémité distale dudit tube, la composition alimentaire au fur et à mesure du déplacement dudit tube, tout en maintenant immobile, en translation axiale, ledit pain.

### RESUME DE L'INVENTION

L'invention concerne un procédé de préparation de sandwichs caractérisé en ce qu'il comporte une séquence de préparation d'une garniture et une séquence de fourrage d'une baguette caractérisé en ce que :
a) la séquence de préparation d'une garniture consiste
   a. à déposer dans un conditionnement avec une face supérieure ouverte, les ingrédients alimentaires de la garniture
   b. à introduire le conditionnement ainsi garni dans un sachet étanche et de procéder à une mise sous vide alimentaire ou sous gaz inerte
b) la séquence de fourrage consiste à
   a. ouvrir en deux une baguette
   b. retirer dans une des moitiés une partie de la mie pour former une cavité
   c. déverser dans la cavité ainsi formée le contenu du conditionnement garni après retrait du sachet
   d. rabattre la seconde moitié de la baguette sur la cavité fourrée avec la garniture.

Avantageusement ladite séquence de préparation d'une garniture comporte une étape intermédiaire d'insertion d'un feuille anti-adhésive (2) alimentaire entre ledit conditionnement et ladite garniture.

De préférence ladite séquence de préparation d'une garniture comporte une étape additionnelle de réfrigération ou de congélation des conditionnements garnis et ensachés.

Avantageusement, ledit conditionnement est en carton.

L'invention concerne aussi un conditionnement garni spécifiquement destiné à la mise en œuvre du procédé selon les revendications 2 et 4, caractérisé en ce qu'il est constitué par un conditionnement contenant une garniture déposée sur une feuille intercalaire anti-adhésive (2) alimentaire, ensaché dans un sachet mis sous vide ou sous gaz inerte.

### Description détaillée d'un exemple non limitatif de réalisation

La présente invention sera mieux comprise à la lecture de la description qui suit, concernant un exemple non limitatif de réalisation illustré par les dessins annexés :

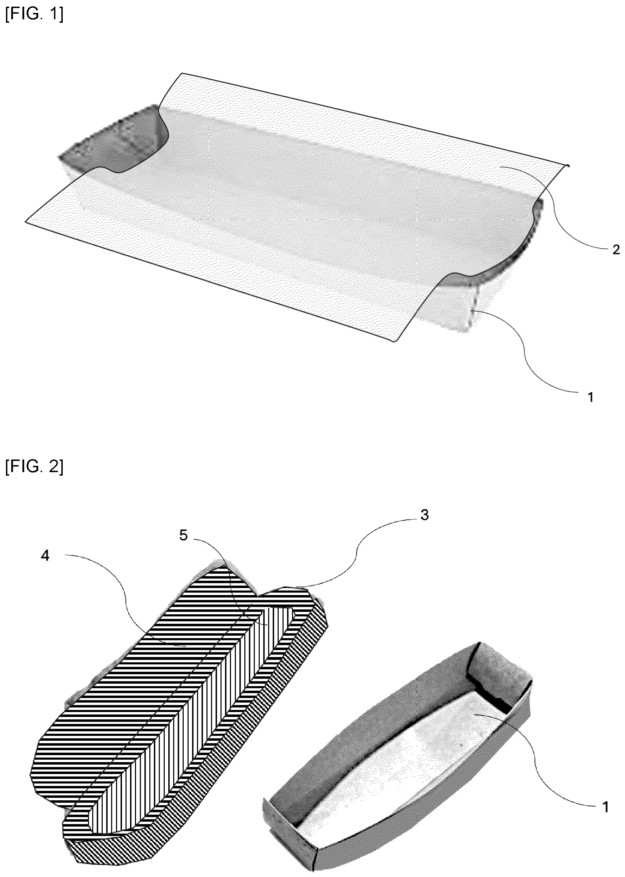

[FIG. 1] La figure 1 représente une vue d'un conditionnement et de la feuille anti-adhésive
[FIG.2] La figure 2 représente une vue de la baguette et du conditionnement vide.

### Séquence de préparation d'une garniture

La première étape concerne la dépose des ingrédients. Les ingrédients alimentaires de la garniture sont formés par exemple de cubes de légumes, de poisson, de fromage ou de viande ; ils sont déposés dans un conditionnement, qui est un récipient à face supérieure ouverte. Le conditionnement (1) peut être en carton ou tout autre matériau apte au contact alimentaire. De préférence, on place sur le conditionnement (1) ouvert une feuille anti-adhésive (2) alimentaire, par exemple du papier sulfurisé, sur lequel on dépose les ingrédients et on repousse l'ensemble dans le conditionnement (1) en carton. Optionnellement on ajoute une sauce sur ces aliments.

La feuille anti-adhésive (2) alimentaire insérée entre le conditionnement (1) et la garniture permet de faciliter le retrait de la garniture du conditionnement (1) sans qu'elle adhère aux parois.

L'étape suivante est l'ensachage et mise sous vide. Le conditionnement (1) garni est ensuite introduit dans un sachet étanche. Ce sachet est soit mis sous vide alimentaire, soit rempli de gaz inerte afin de prolonger la conservation des ingrédients et éviter l'oxydation et la formation de cristaux de glace lors de la congélation.

### Conservation intermédiaire

Les conditionnements (1) garnis ainsi préparés peut ensuite être conservé pendant une durée assez longue, au réfrigérateur ou au congélateur, afin de prolonger leur durée de conservation et de préserver la fraîcheur des ingrédients jusqu'à leur utilisation et pour être repris au moment de la préparation des sandwichs.

### Séquence de fourrage

Ouverture de la baguette : Une baguette est coupée en deux dans le sens de la longueur pour former deux moitiés (3, 4). On forme ensuite une cavité (5) : dans une des moitiés de la baguette, une partie de la mie est retirée afin de former une cavité (5) destinée à accueillir la garniture.

On déverse ensuite le contenu de conditionnement (1) garni dans cette cavité (5), éventuellement après l'avoir réchauffé au micro-onde.

Le sachet étanche est retiré et le contenu du conditionnement (1) garni est déversé dans la cavité (5) formée dans la baguette. La seconde moitié de la baguette est ensuite rabattue sur la cavité (5) fourrée avec la garniture, complétant ainsi la préparation du sandwich.

### Conditionnement (1) garni pour la mise en œuvre du procédé

Le conditionnement (1) est conçu pour contenir une garniture déposée sur une feuille intercalaire anti-adhésive (2) alimentaire. Il est par exemple réalisé en carton, ou en un matériau réutilisable après nettoyage. Le conditionnement (1) est, après remplissage de la garniture alimentaire, ensaché dans un sachet étanche qui est mis sous vide ou rempli de gaz inerte. Ce type de conditionnement (1) permet une manipulation facile et une intégrité des ingrédients jusqu'à leur incorporation dans le sandwich.

Le procédé de préparation de sandwichs décrit ici optimise la conservation et la manipulation des ingrédients de la garniture grâce à une série d'étapes précises et l'utilisation de conditionnements (1) spécifiques. Ces techniques assurent une préparation efficace et hygiénique des sandwichs tout en maintenant la qualité et la fraîcheur des ingrédients. Elle permet de préparer rapidement, à la demande, des sandwichs gouteux et frais.

## Revendications

1. - Procédé de préparation de sandwichs **caractérisé en ce qu'**il comporte une séquence de préparation d'une garniture et une séquence de fourrage d'une baguette **caractérisé en ce que** :
a) la séquence de préparation d'une garniture consiste
a. à déposer dans un conditionnement (1) avec une face supérieure ouverte, les ingrédients alimentaires de la garniture
b. à introduire le conditionnement (1) ainsi garni dans un sachet étanche et de procéder à une mise sous vide alimentaire ou sous gaz inerte
b) la séquence de fourrage consiste à
a. ouvrir en deux une baguette
b. retirer dans une des moitiés une partie de la mie pour former une cavité (5)
c. déverser dans la cavité (5) ainsi formée le contenu du conditionnement (1) garni après retrait du sachet
d. rabattre la seconde moitié de la baguette sur la cavité (5) fourrée avec la garniture.

2. - Procédé de préparation de sandwichs selon la revendication 1 **caractérisé en ce que** ladite séquence de préparation d'une garniture comporte une étape intermédiaire d'insertion d'un feuille anti-adhésive (2) alimentaire entre ledit conditionnement (1) et ladite garniture.

3. - Procédé de préparation de sandwichs selon la revendication 1 **caractérisé en ce que** ladite séquence de préparation d'une garniture comporte une étape additionnelle de réfrigération ou de congélation des conditionnements (1) garnis et ensachés.

4. - Procédé de préparation de sandwichs selon la revendication 1 **caractérisé en ce que** ledit conditionnement (1) est en carton.

5. - Conditionnement (1) garni spécifiquement destiné à la mise en œuvre du procédé selon les revendications 2 et 4, **caractérisé en ce qu'**il est constitué par un conditionnement (1) contenant une garniture déposée sur une feuille intercalaire anti-adhésive (2) alimentaire, ensaché dans un sachet mis sous vide ou sous gaz inerte.
